## Europäisches Patentamt

## European Patent Office

## Office européen des brevets

(19)

(11) Veröffentlichungsnummer: **0 084 182**
**B1**

(12) # EUROPÄISCHE PATENTSCHRIFT

(45) Veröffentlichungstag der Patentschrift:
04.06.86

(21) Anmeldenummer: 82112107.6

(22) Anmeldetag: 30.12.82

(51) Int. Cl.⁴: **F 02 M 61/16**

(54) **Kraftstoff-Einspritzdüse für Brennkraftmaschinen.**

(30) Priorität: 16.01.82 DE 3201218

(43) Veröffentlichungstag der Anmeldung:
27.07.83 Patentblatt 83/30

(45) Bekanntmachung des Hinweises auf die Patenterteilung:
04.06.86 Patentblatt 86/23

(84) Benannte Vertragsstaaten:
**DE FR GB IT**

(56) Entgegenhaltungen:
**CH - A - 508 810**
**DE - B - 1 266 725**
**FR - A - 786 449**
**GB - A - 754 528**
**US - A - 2 067 131**

(73) Patentinhaber: **ROBERT BOSCH GMBH, Postfach 50,
D-7000 Stuttgart 1 (DE)**

(72) Erfinder: **Hofmann, Karl, Amselweg 22,
D-7148 Remseck 1 (DE)**

ACTORUM AG

## Beschreibung

Die Erfindung geht aus von einer Kraftstoff-Einspritzdüse nach der Gattung des unabhängi-
~~...~~ erheblich verringert, ohne dass der Durchgangswiderstand nennenswert vergrössert wird. Im Bedarfsfall kann die Anordnung auch so getroffen sein, dass die Längsnuten 38, 40 kürzer als in der Zeichnung dargestellt ausgeführt werden und näher an der Längsmitte des Filterkörpers 30 enden.

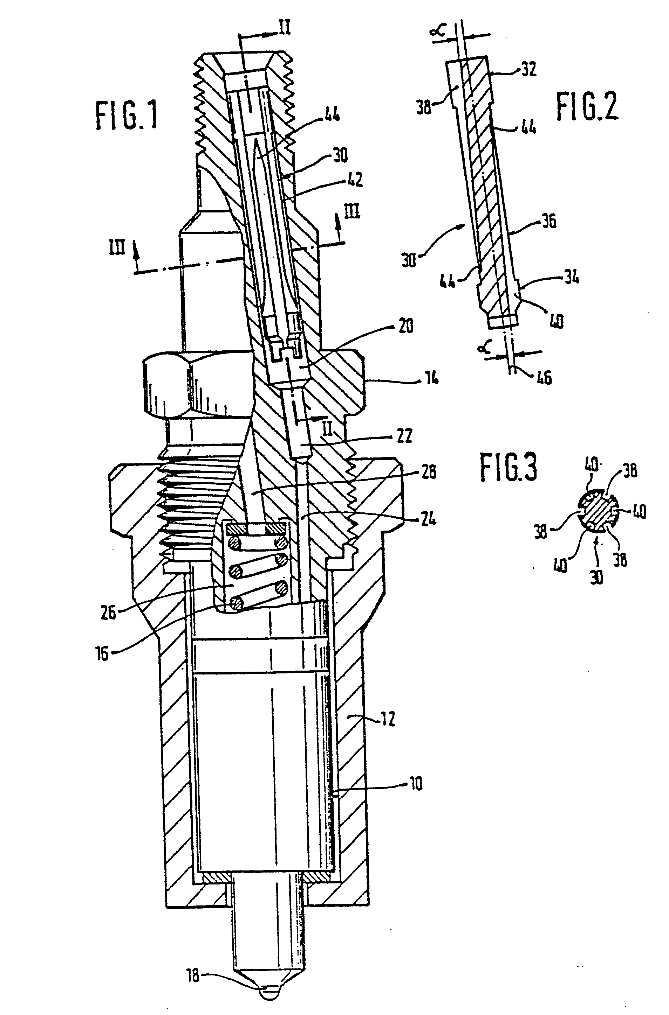

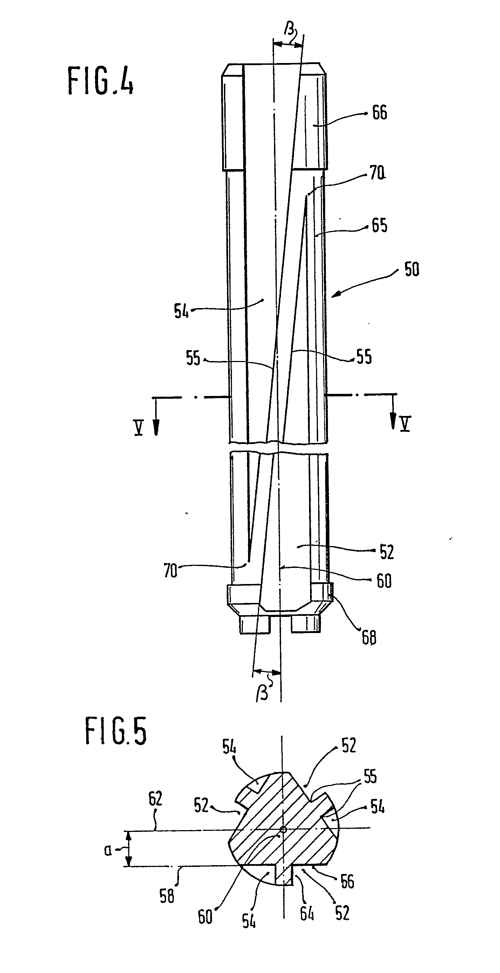

Beim erfindungsgemässen Ausführungsbeispiel nach den Figuren 4 und 5 ist ein stabförmiger Filterkörper 50 mit zwei Gruppen 52, 54 von Längsnuten versehen, welche einen V-förmigen Querschnitt und demzufolge je eine Grundlinie 55 haben und paarweise nebeneinander verlaufen. Jede Längsnut 52, 54 ist so angeordnet, dass ihre eine Flanke 56 (Figur 5) in einer Ebene 58 liegt, welche im Abstand a parallel zu einer die Längsachse 60 des Filterkörpers 50 aufnehmenden Ebene 62 verläuft. Die andere Flanke 64 der Längsnuten 52, 54 verläuft im Abstand parallel zur entsprechenden Flanke 64 der zugeordneten Längsnut 54 bzw. 52 und im Winkel β zur Längsachse 60 des Filterkörpers 50. Bei dieser Anordnung können die paarweise einander zugeordneten Längsnuten 52, 54 gemeinsam in einem Arbeitsgang in den Filterkörper 50 eingefräst werden.

Die Längsnuten 52, 54 enden in einem im Durchmesser leicht geschwächten mittleren Abschnitt 65 des Filterkörpers, der beiderseits von die Kraftstoff-Zulaufbohrung passend ausfüllenden Ringbunden 66, 68 begrenzt ist. Der Kraftstoff ist auch bei dieser Ausführung gezwungen, durch die eine Gruppe 54 von Längsnuten in den den mittleren Abschnitt 65 umgebenden Ringspalt und von dort in die zweite Gruppe 52 der Längsnuten zu treten, wodurch die erwünschte Filterwirkung eintritt. Durch die Schräglage der Längsnuten 52, 54 nimmt deren Querschnitt bis auf den Wert Null ab, so dass, wie Figur 4 zeigt, ihre am Mantelumfang des zylindrischen Abschnitts 65 liegenden Längskanten am Nutende 70 in einer Spitze zusammenlaufen.

## Patentansprüche

1. Kraftstoff-Einspritzdüse für Brennkraftmaschinen, mit einem stabförmigen Filterkörper (50) in einem der Spritzöffnung vorgelagerten Kraftstoffkanal (20), welcher an seinen Stirnenden mit je einem den Kanalquerschnitt passend ausfüllenden Bund (66, 68) und dazwischen mit einem im Durchmesser leicht geschwächten Mittelabschnitt (65) versehen ist, und welcher zwei Gruppen von Längsnuten (52, 54) in der Mantelfläche hat, von denen die eine von der einen Stirnseite und die andere Gruppe von der anderen Stirnseite ausgeht und alle Längsnuten (52, 54) im Mittelabschnitt (65) enden, gekennzeichnet durch folgende Merkmale:

a) die Breite und die Tiefe der Längsnuten (52,

mutter 12 an einem Düsenhalter 14 festgespannt ist. Der Düsenkörper 10 enthält wie üblich eine gegen die Kraft eine Schliessfeder 16 verschiebbare Ventilnadel welche einen Ventilsitz über Grundlinien (55) der Längsnuten (52, 54) bzw. die Mittellinien von ebenen Grundflächen der Längsnuten liegen in Ebenen (58), die je im Abstand (a) parallel zu einer die Längsachse (60) aufnehmende Ebene (62) des Filterkörpers (50) angeordnet sind, und

c) die Grundlinien (55) bzw. die Mittellinien der Grundflächen der Längsnuten (52, 54) sind im Winkel (β) zur Längsachse (60) des Filterkörpers (50) angeordnet.

2. Einspritzdüse nach Anspruch 1, dadurch gekennzeichnet, dass jede Längsnut (52, 54) von zwei ebenen Nutflanken (56, 64) begrenzt ist, von denen die eine (56) in einer Ebene (58) liegt, welche im Abstand (a) parallel zu einer die Längsachse (60) des Filterkörpers (50) aufnehmenden Ebene (62) angeordnet ist, wogegen die andere Nutflanke (64) in einem Winkel (β) zur Längsachse (60) verläuft.

3. Einspritzdüse nach Anspruch 2, dadurch gekennzeichnet, dass jeweils eine von dem einen Stirnende ausgehende Längsnut (54) so zu einer von dem anderen Stirnende ausgehenden Längsnut (52) angeordnet ist, dass ihre einen Nutflanken (56) in einer gemeinsamen Ebene (58) liegen und ihre anderen Nutflanken (64) sich parallel gegenüberstehen.

## Claims

1. Fuel injection nozzle for internal-combustion engines, with a rod-shaped filter element (50) in a fuel channel (20) situated directly in front of the injection opening, which fuel channel is provided at each of its ends with a collar (66, 68) just filling the channel crosssection and, in between, with a middle section (65), slightly reduced in diameter, and which channel has two groups of longitudinal grooves (52, 54) in the surface area, of which one group departs from one end and the other group departs from the other end and all longitudinal grooves (52, 54) terminate in the middle section (65), characterised by the following features:

a) the width and the depth of the longitudinal grooves (52, 54) decrease, as is known, toward the groove end (70) lying in the middle section (65) of the filter element (50),

b) the base lines (55) of the longitudinal grooves (52, 54), developed as extended straight lines, or the mid lines of plane base areas of the longitudinal grooves lie in planes (58) which are arranged each at the distance (a) parallel to a plane (62) of the filter element (50) incorporating the longitudinal axis (60), and

c) the base lines (55) or the mid lines of the base areas of the longitudinal grooves (52, 54) are arranged at the angle (β) to the longitudinal axis (60) of the filter element (50).

körpers 30 aufnehmenden Ebene, in einem Winkel α zur Längsachse, verlaufen. Dadurch wird bei gleichbleibenden Aussenabmessungen das schädliche Kraftstoffvolumen im Filterkörper 30 erheblich verringert, ohne dass der Durchgangswiderstand nennenswert vergrössert wird. Im Bedarfsfall kann die Anordnung auch so getroffen sein, dass die Längsnuten 38, 40 kürzer als in der Zeichnung dargestellt ausgeführt werden und näher an der Längsmitte des Filterkörpers 30 enden.

Beim erfindungsgemässen Ausführungsbeispiel nach den Figuren 4 und 5 ist ein stabförmiger Filterkörper 50 mit zwei Gruppen 52, 54 von Längsnuten versehen, welche einen V-förmigen Querschnitt und demzufolge je eine Grundlinie 55 haben und paarweise nebeneinander verlaufen. Jede Längsnut 52, 54 ist so angeordnet, dass ihre eine Flanke 56 (Figur 5) in einer Ebene 58 liegt, welche im Abstand a parallel zu einer die Längsachse 60 des Filterkörpers 50 aufnehmenden Ebene 62 verläuft. Die andere Flanke 64 der Längsnuten 52, 54 verläuft im Abstand parallel zur entsprechenden Flanke 64 der zugeordneten Längsnut 54 bzw. 52 und im Winkel β zur Längsachse 60 des Filterkörpers 50. Bei dieser Anordnung können die paarweise einander zugeordneten Längsnuten 52, 54 gemeinsam in einem Arbeitsgang in den Filterkörper 50 eingefräst werden.

Die Längsnuten 52, 54 enden in einem im Durchmesser leicht geschwächten mittleren Abschnitt 65 des Filterkörpers, der beiderseits von die Kraftstoff-Zulaufbohrung passend ausfüllenden Ringbunden 66, 68 begrenzt ist. Der Kraftstoff ist auch bei dieser Ausführung gezwungen, durch die eine Gruppe 54 von Längsnuten in den den mittleren Abschnitt 65 umgebenden Ringspalt und von dort in die zweite Gruppe 52 der Längsnuten zu treten, wodurch die erwünschte Filterwirkung eintritt. Durch die Schräglage der Längsnuten 52, 54 nimmt deren Querschnitt bis auf den Wert Null ab, so dass, wie Figur 4 zeigt, ihre am Mantelumfang des zylindrischen Abschnitts 65 liegenden Längskanten am Nutende 70 in einer Spitze zusammenlaufen.

## Patentansprüche

1. Kraftstoff-Einspritzdüse für Brennkraftmaschinen, mit einem stabförmigen Filterkörper (50) in einem der Spritzöffnung vorgelagerten Kraftstoffkanal (20), welcher an seinen Stirnenden mit je einem den Kanalquerschnitt passend ausfüllenden Bund (66, 68) und dazwischen mit einem im Durchmesser leicht geschwächten Mittelabschnitt (65) versehen ist, und welcher zwei Gruppen von Längsnuten (52, 54) in der Mantelfläche hat, von denen die eine von der einen Stirnseite und die andere Gruppe von der anderen Stirnseite ausgeht und alle Längsnuten (52, 54) im Mittelabschnitt (65) enden, gekennzeichnet durch folgende Merkmale:

a) die Breite und die Tiefe der Längsnuten (52, 54) nehmen wie bekannt gegen das im Mittelabschnitt (65) des Filterkörpers (50) liegende Nutende (70) hin ab;

b) die als gestreckte Geraden ausgebildeten Grundlinien (55) der Längsnuten (52, 54) bzw. die Mittellinien von ebenen Grundflächen der Längsnuten liegen in Ebenen (58), die je im Abstand (a) parallel zu einer die Längsachse (60) aufnehmende Ebene (62) des Filterkörpers (50) angeordnet sind, und

c) die Grundlinien (55) bzw. die Mittellinien der Grundflächen der Längsnuten (52, 54) sind im Winkel (β) zur Längsachse (60) des Filterkörpers (50) angeordnet.

2. Einspritzdüse nach Anspruch 1, dadurch gekennzeichnet, dass jede Längsnut (52, 54) von zwei ebenen Nutflanken (56, 64) begrenzt ist, von denen die eine (56) in einer Ebene (58) liegt, welche im Abstand (a) parallel zu einer die Längsachse (60) des Filterkörpers (50) aufnehmenden Ebene (62) angeordnet ist, wogegen die andere Nutflanke (64) in einem Winkel (β) zur Längsachse (60) verläuft.

3. Einspritzdüse nach Anspruch 2, dadurch gekennzeichnet, dass jeweils eine von dem einen Stirnende ausgehende Längsnut (54) so zu einer von dem anderen Stirnende ausgehenden Längsnut (52) angeordnet ist, dass ihre einen Nutflanken (56) in einer gemeinsamen Ebene (58) liegen und ihre anderen Nutflanken (64) sich parallel gegenüberstehen.

## Claims

1. Fuel injection nozzle for internal-combustion engines, with a rod-shaped filter element (50) in a fuel channel (20) situated directly in front of the injection opening, which fuel channel is provided at each of its ends with a collar (66, 68) just filling the channel crosssection and, in between, with a middle section (65), slightly reduced in diameter, and which channel has two groups of longitudinal grooves (52, 54) in the surface area, of which one group departs from one end and the other group departs from the other end and all longitudinal grooves (52, 54) terminate in the middle section (65), characterised by the following features:

a) the width and the depth of the longitudinal grooves (52, 54) decrease, as is known, toward the groove end (70) lying in the middle section (65) of the filter element (50),

b) the base lines (55) of the longitudinal grooves (52, 54), developed as extended straight lines, or the mid lines of plane base areas of the longitudinal grooves lie in planes (58) which are arranged each at the distance (a) parallel to a plane (62) of the filter element (50) incorporating the longitudinal axis (60), and

c) the base lines (55) or the mid lines of the base areas of the longitudinal grooves (52, 54) are arranged at the angle (β) to the longitudinal axis (60) of the filter element (50).

2. Injection nozzle according to Claim 1, characterised in that each longitudinal groove (52, 54) is bounded by two plane groove flanks (56, 64), one of which (56) lies in a plane (58) which is arranged at the distance (a) parallel to a plane (62) incorporating the longitudinal axis (60) of the filter element (50), whereas the other groove flank (64) runs at an angle (β) to the longitudinal axis (60).

3. Injection nozzle according to Claim 2, characterised in that in each case a longitudinal groove (54) departing from one end is arranged relative to a longitudinal groove (52) departing from the other end so that their one groove flanks (56) lie in a common plane (58) and their other groove flanks (64) are oppositely parallel to each other.

**Revendications**

1. Buse d'injection de carburant pour moteurs à combustion interne ayant un corps de filtre (50) en forme de tige dans lequel est réalisé un canal de carburant (20) en amont de l'orifice d'injection, corps dont les extrémités frontales ont chaque fois un collet (66, 68) adapté à la section du canal et entre ces collets un segment médian (65) de diamètre légèrement diminué, et présentant deux groupes de rainures longitudinales (52, 54) à sa surface périphérique, parmi lesquelles celles de l'un des groupes partent d'une face frontale et celles de l'autre groupe partent de l'autre face frontale et toutes les rainures longitudinales (52, 54) se terminent dans la section médiane (65), caractérisée par les points suivants:

a) la largeur et la profondeur des rainures longitudinales (52, 54) diminuent comme cela est connu vers l'extrémité de rainure (70) située dans le segment médian (65) du corps de filtre (50),

b) les lignes de base (55) des rainures longitudinales (52, 54) ou des lignes médianes des surfaces de fond des rainures longitudinales constituées par des droites, se situent dans des plans (58) qui sont à la distance a et parallèles à un plan (62) du corps de filtre (50) passant par l'axe longitudinal (60) et

c) les lignes de base (55) ou les lignes médianes des surfaces de base (fonds) des rainures longitudinales (52, 54) font un angle (β) par rapport à l'axe longitudinal (60) du corps de filtre (50).

2. Buse d'injection selon la revendication 1, caractérisée en ce que chaque rainure longitudinale (52, 54) est délimitée par deux flancs de rainure plans (56, 64) parmi lesquels l'un des flancs (56) est situé dans un plan (58) qui est à la distance a et parallèle à un plan (62) passant par l'axe longitudinal (60) du corps de filtre (50) alors que l'autre flanc de rainure (64) fait un angle (β) par rapport à l'axe longitudinal (60).

3. Buse d'injection selon la revendication 2, caractérisée en ce que chaque fois l'une des rainures longitudinales (54) qui part d'une extrémité ' frontale est disposée par rapport à une rainure longitudinale partant de l'autre extrémité frontale de façon que l'un des flancs de rainure (56) se situe dans un plan commun (58) et l'autre flanc de rainure (64) soit parallèle à celui-ci.

0 084 182

FIG.1

FIG.2

FIG.3

5

FIG.4

FIG.5